# EUROPÄISCHE PATENTSCHRIFT

(11) **EP 2 267 566 B1**
(45) Veröffentlichungstag und Bekanntmachung des Hinweises auf die Patenterteilung: **30.10.2019**
(21) Anmeldenummer: 10157275.8
(22) Anmeldetag: 23.03.2010
(51) Int. Cl.: A01B 69/04, G05D 1/02, A01D 41/127

(54) **Routenplanungsverfahren und -system**
Method and system for route planning
Procédé et système pour planification d'itinéraire

(30) Priorität: 16.06.2009 DE 102009025438
(43) Veröffentlichungstag der Anmeldung: 29.12.2010
(73) Patentinhaber: CLAAS Selbstfahrende Erntemaschinen GmbH, 33428 Harsewinkel (DE)
(72) Erfinder: Meyer zu Helligen, Lars-Peter, 32139 Spenge (DE)
(74) Vertreter: CLAAS Gruppe

(56) Entgegenhaltungen:
- DE-A1- 19 514 223
- DE-A1- 19 545 704
- US-A1- 2005 197 175

## Beschreibung

### Routenplanungsverfahren und -system

Die vorliegende Erfindung betrifft ein Verfahren und ein System zur Planung einer Route zur Bearbeitung einer landwirtschaftlichen Fläche durch eine fahrbare Maschine wie etwa einen Grubber, einen Pflug, eine Sämaschine, Maschinen zum Verteilen von Dünge- und Pflanzenschutzmitteln oder eine Erntemaschine.

Aus DE 195 14 223 A1 ist ein Planungssystem bekannt, bei dem Positionsdaten einer fahrbaren Maschine einem Leitrechner übermittelt werden. Anhand dieser Positionsdaten kann der Leitrechner einen von der Maschine abgefahrenen Weg erfassen und darauf basierend Fahrspuren der Maschine so vorwählen, dass ein Flächenstück während einer Wachstumsperiode nicht mehrfach Überfahren wird. Auf diese Weise soll eine zu hohe Bodenverdichtung vermieden werden. Die Zielsetzung, ein mehrfaches Überfahren gleicher Flächenstücke zu vermeiden, schränkt die Auswahl möglicher Routen erheblich ein, wenn im Laufe der Vegetationsperiode mehrere Bearbeitungen auf einer gleichen Fläche durchgeführt werden müssen. Wenn der Versuch, bei einer zweiten Bearbeitung der Fläche das erneute Befahren von bereits bei einer ersten Bearbeitung befahrenen Flächen stücken zu vermeiden, dazu führt, dass Umwege gefahren werden müssen, dann erhöhen sich zum einen die Treibstoffkosten, zum anderen nimmt auch der Anteil der Fläche, der von Verdichtung durch das Befahren betroffen ist, überproportional zu. Außerdem blockieren die gefahrenen Umwege ihrerseits mögliche Routen für eine dritte Bearbeitung der Fläche, so dass die oben genannten Nachteile um so schwerer wiegen, je mehr Bearbeitungen erforderlich werden. Dies kann die eigentliche Zielsetzung, die Fläche zu schonen, völlig vereiteln. Die Vermeidung eines mehrfachen Befahrens gleicher Bodenflächen während einer Wachstumsperiode führt daher zu wenig praxisgerechten Ergebnissen.

Aus DE 195 45 704 A1 ist ein Verfahren bekannt, bei dem eine zu untersuchende Fläche mit einem eine Radar-Detektoranordnung tragenden Fahrzeug abgefahren wird, um anhand von Radarsignalen des Bodens Inhomogenitäten zu erkennen und in der Umgebung dieser Inhomogenitäten mit erhöhter Dichte Messpunkte festzulegen. Mit Hilfe von an diesen Messpunkten gewonnener Bodenproben können zum Beispiel Bodenverdichtungen ermittelt werden, um anschließend geeignete Maßnahmen zur Bodenverbesserung zu ergreifen. Die mit diesen Verfahren ermittelbare Bodenverdichtung ist zwangsläufig zum Teil durch das Fahrzeug selbst verursacht. Das bedeutet, dass wenn das bekannte Verfahren eingesetzt würde, um zu untersuchen, wie sich das Befahren einer landwirtschaftlichen Fläche mit Arbeitsmaschinen auf die Bodenverdichtung auswirkt, wäre die Verfälschung der Messdaten durch die vom Messfahrzeug verursachte Verdichtung vergleichbar dem eigentlich zu messenden

Effekt. Infolge dessen ist das bekannte Verfahren zum Abschätzen von durch landwirtschaftliche Bearbeitungsmaschinen verursachten Bodenverdichtungen ungeeignet.

Aus der US2005197175A1 ist ein Verfahren zur Routenplanung bekannt, bei dem unter anderem die Bodenverdichtung durch das Fahrzeug, zu umfahrende Hindernisse und Fähigkeiten des Fahrzeugs berücksichtigt werden.

Aufgabe der vorliegenden Erfindung ist, ein Verfahren zur Planung einer Route zur bodenschonenden Bearbeitung einer landwirtschaftlichen Fläche durch eine fahrbare Maschine zu schaffen, die mit geringem Arbeitsaufwand realisierbar ist und den Anforderungen der Praxis besser genügt als das bisher bekannte Verfahren.

Die Aufgabe wird gelöst durch ein Verfahren mit den Schritten:
- Ortsaufgelöstes Abschätzen einer aus einer früheren Bearbeitung der Fläche durch dieselbe oder eine andere Maschine resultierenden Bodenverdichtung, und
- Berücksichtigen der abgeschätzten Bodenverdichtung bei der Festlegung des Verlaufs einer Route für die vorgesehene Bearbeitung der Fläche durch die Maschine.

Die Erfindung wird durch den unabhängigen Anspruch 1 definiert.

Die Ortsauflösung sollte wenigstens horizontal sein; denkbar ist aber auch eine vertikale Ortsauflösung, das heißt eine Abschätzung der Bodenverdichtung in unterschiedlichen Tiefen des Bodens, da der Verdichtungseffekt je nach Art einer Bodenbearbeitung unterschiedlich sein kann. So können Scherkräfte, die insbesondere zwischen zugbelasteten Antriebsrädern eines Fahrzeugs und dem Boden auftreten, zu starken Verdichtungen in einer oberflächennahen Schicht des Bodens führen, während auf tiefere Bodenschichten im Wesentlichen nur eine Druckbelastung wirkt. Andererseits kann eine tiefe Bodenschicht stark beansprucht sein, wenn etwa beim Pflügen die Zugmaschine in der Furche fährt.

Ein Satz von ortsaufgelösten Bodenverdichtungsdaten der zu bearbeitenden Fläche wird erfindungsgemäß bei jeder Bearbeitung der Fläche aktualisiert, um den Einfluss jeder Bodenbearbeitung zu erfassen und bei der nächsten anstehenden Bearbeitung berücksichtigen zu können. Die Berücksichtigung erfolgt zweckmäßigerweise unabhängig davon, ob die bei der Bodenbearbeitung abgefahrene Route selbst nach dem erfindungsgemäßen Verfahren geplant wurde oder nicht.

Im einfachsten Fall kann der Datensatz mit einem willkürlich angenommenen oder geschätzten, an jedem Ort gleichen Wert der Bodenverdichtung initialisiert werden; realistischer ist eine Initialisierung durch gemessene Bodendichtedaten.

Eine für die Bodenverdichtung eines Flächenstücks repräsentativer Wert kann in Abhängigkeit von verschiedenen Parametern abgeschätzt werden, insbesondere wenigstens eines maschinenbezogenen Parameters wie etwa des Maschinentyps, einer mittleren oder, bevorzugt, momentanen Masse der Maschine, ihrem Reifendruck oder ihrer Reifenaufstandsfläche und/oder eines bodenbezogenen Parameters wie etwa der Bodenzusammensetzung, Bodenfeuchte oder Bodentemperatur. Der Maschinentyp erlaubt zumindest einen ungefähren Rückschluss auf das Gewicht der Maschine und damit auf die den Boden beim Befahren komprimierende Last, außerdem können die Auswirkungen einer gleichen Last auf die Bodenverdichtung je nach Art der von der Maschine durchgeführten Bearbeitung stark unterschiedlich sein. Die Aufstandsfläche erlaubt, aus dem Gewicht der Maschine auf den auf den Boden einwirkenden Druck zu schließen. Dasselbe ist - eine geeignete Kalibrierung vorausgesetzt - auch mit Hilfe des Reifendrucks möglich. Was die Zusammensetzung angeht, neigen Böden im Allgemeinen mit steigendem Tonanteil weniger, mit steigendem Sandanteil mehr zur Verdichtung. Ein hoher Gehalt des Bodens an flüssigem Wasser fördert ebenfalls die Beweglichkeit der Bodenpartikel relativ zueinander und damit die Empfindlichkeit gegen Verdichtung. Auch die Bodentemperatur hat einen Einfluss, denn gefrorenes Wasser im Boden verringert die Verdichtungsempfindlichkeit und umso stärker, je mehr davon vorhanden ist.

Ein verdichteter Boden lockert in gewissem Umfang ohne menschliches Zutun wieder auf, etwa durch Frostgare oder durch die Aktivität von Bodenlebewesen. Eine solche Bodenregeneration oder "negative Verdichtung" wird daher zweckmäßigerweise bei der Abschätzung der Bodenverdichtung mit berücksichtigt.

Die Berücksichtigung der Bodenverdichtung bei der Routenplanung kann erfolgen, indem eine mögliche Route verworfen wird, wenn auf wenigstens einem Stück der Route die aktuelle Verdichtung einen Grenzwert übersteigt.

Flexibler ist eine Ausgestaltung des Verfahrens, bei der zunächst eine Route versuchsweise festgelegt, eine aus dem Abfahren der Route resultierende Bodenverdichtung für wenigstens ein Stück der Route abgeschätzt und die Route verworfen wird, wenn die Abschätzung in dem Stück eine Überschreitung eines Grenzwerts der Bodenverdichtung ergibt. Indem bei dieser Ausgestaltung des Verfahrens die resultierende Verdichtung im Vorhinein abgeschätzt wird, wird die Möglichkeit erreicht, veränderlichen Parametern in flexibler Weise Rechnung zu tragen, indem zum Beispiel eine versuchsweise festgelegte Route bei trockenem Boden für brauchbar befunden wird, die bei feuchtem Boden lokal zu einer übermäßigen Verdichtung führen und deshalb verworfen würde. Außerdem kann eine Route für ein leichtes, den Boden wenig verdichtendes Fahrzeug als brauchbar beurteilt werden, die bei einem schwereren Fahrzeug zu übermäßiger Verdichtung führen würde. So kann das leichte Fahrzeug gegebenenfalls eine kürzere, wirtschaftlichere Route fahren, als dies mit einem schwereren Fahrzeug möglich wäre.

Besonders vorteilhaft ist es, wenn für die Abschätzung der Verdichtung die Masse des Fahrzeugs ortsabhängig prognostiziert wird, z.B. indem Massenänderungen des Fahrzeugs, die auf den Verbrauch von Betriebsmitteln wie etwa Dünge- oder Pflanzenschutzmittel oder auf die Gewinnung von Erntegut zurückgehen, berücksichtigt werden. Zum einen führt eine solch detaillierte Prognose dazu, das Flächenstücke nicht unnötigerweise von einer erneuten Überfahrung ausgeschlossen werden müssen. Darüber hinaus kann zum Beispiel die Prognose ergeben, dass ein zuvor von einem voll beladenen Düngerstreuer befahrenes Flächenstück zwar nicht mehr von einem voll beladenen Erntefahrzeug befahren werden sollte, dass aber eine Befahrung mit einem gering beladenen Erntefahrzeug noch zulässig ist.

Dies kann in einer zweckmäßigen Weiterentwicklung dazu führen, dass, um eine Route zulässig zu machen, vor dem Überfahren eines hoch verdichteten Flächenstücks eine das Gewicht der Maschine vermindernde Maßnahme, zum Beispiel das Abtanken eines Erntefahrzeugs, eingeplant wird, um ein Befahren des hoch verdichteten Flächenstücks ohne eine übermäßige Verdichtung zu ermöglichen. In analoger Weise kann eine das Gewicht der Maschine erhöhende Maßnahme wie etwa das Betanken mit Verbrauchsmaterial, aufgeschoben werden, bis ein bereits hoch verdichtetes, mit der voll beladenen Maschine nicht mehr zu befahrendes Flächenstück überfahren ist.

Es kann die Situation auftreten, dass eine Route, deren Befahrung an keiner Stelle zu einer Überschreitung des Grenzwerts der Verdichtung führt, nicht existiert oder durch die Länge der erforderlichen Umwege absolut unwirtschaftlich ist. Um dieser Situation Rechnung zu tragen, kann vorgesehen werden, dass eine Route nur dann verworfen wird, wenn die Länge des Stücks, auf dem die Verdichtung den Grenzwert übersteigt, ihrerseits über einem Grenzwert liegt. Durch passende Festlegungen dieses zweiten Grenzwerts kann erreicht werden, dass eine Überquerung eines bereits stark verdichteten Flächenstücks als zulässig beurteilt wird, wenn sie auf dem kürzesten oder einem hinreichend kurzen Weg erfolgt. Dies ist insbesondere wichtig für die Planung von Wendemanövern am Feldrand.

Das Ergebnis einer solchen Routenplanung kann zwar auf einer kleinen Fläche eine Überschreitung des Grenzwerts der Verdichtung sein, doch kann eine solche örtlich eng begrenzte Überschreitung bezogen auf die Gesamtheit der zu bearbeitenden Fläche immer noch bodenschonender sein, als wenn zur Vermeidung einer solchen Überschreitung ein langer Umweg gefahren werden muss, der seinerseits zu einer über eine größere Fläche verteilten Verdichtung führt.

Unter dem Gesichtspunkt einer größtmöglichen Schonung des Bodens bezogen auf die gesamte zu bearbeitende Fläche kann das Verfahren ferner die Schritte des Vorplanens mehrerer alternativer Routen für die Bearbeitung der Fläche, des Integrierens eines für die Bodenverdichtung repräsentativen Parameters entlang einer jeden der vorgeplanten Routen und das Auswählen einer der vorgeplanten Routen unter Berücksichtigung der für diese Routen erhaltenen Integralwerte umfassen. Der repräsentative Parameter wird dabei im Allgemeinen nicht linear proportional zur Bodenverdichtung sein; indem eine quadratische oder höhere Proportionalität oder eine andere geeignete Beziehung vorgesehen wird, können lokale Überschreitungen des Grenzwerts der Verdichtung mehr oder weniger streng unterdrückt werden.

Gegenstand der Erfindung ist auch ein Routenplanungssystem mit einem zur Durchführung des oben beschriebenen Verfahrens geeigneten Leitrechner und wenigstens einem Positionssensor an Bord einer fahrbaren Maschine zum Übermitteln von den Ort der Maschine betreffenden Informationen an den Leitrechner. Der Leitrechner selbst kann ebenfalls an Bord der Maschine mitgeführt sein, es kann sich aber auch um einen stationären, eventuell die Daten mehrerer Maschinen verarbeitenden Rechner handeln. Weitere Sensoren zum Ermitteln je nach Ausgestaltung des Verfahrens benötigter Daten wie etwa von Eigenschaften des von der Maschine befahrenen Bodens oder des Gewichts der Maschine können an Bord der Maschine vorgesehen sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Kartendarstellung einer zu bearbeitenden landwirtschaftlichen Fläche und eine in herkömmlicher Weise zur Bearbeitung der Fläche geplanten Route;
- Fig. 2: ein vergrößertes Detail der Fig. 1, das mögliche Abwandlungen der geplanten Route gemäß der Erfindung zeigt;
- Fig. 3: ein vergrößertes Detail aus Fig. 1, das eine zweite Art von erfindungsgemäßer Abwandlung der Routenplanung zeigt;
- Fig. 4: ein Flussdiagramm einer ersten Ausgestaltung des erfindungsgemäßen Routenplanungsverfahrens;
- Fig. 5: ein Detail eines Flussdiagramms gemäß einer bevorzugten Weiterbildung des Verfahrens; und
- Fig. 6: ein Flussdiagramm einer zweiten Ausgestaltung des erfindungsgemäßen Routenplanungsverfahrens.

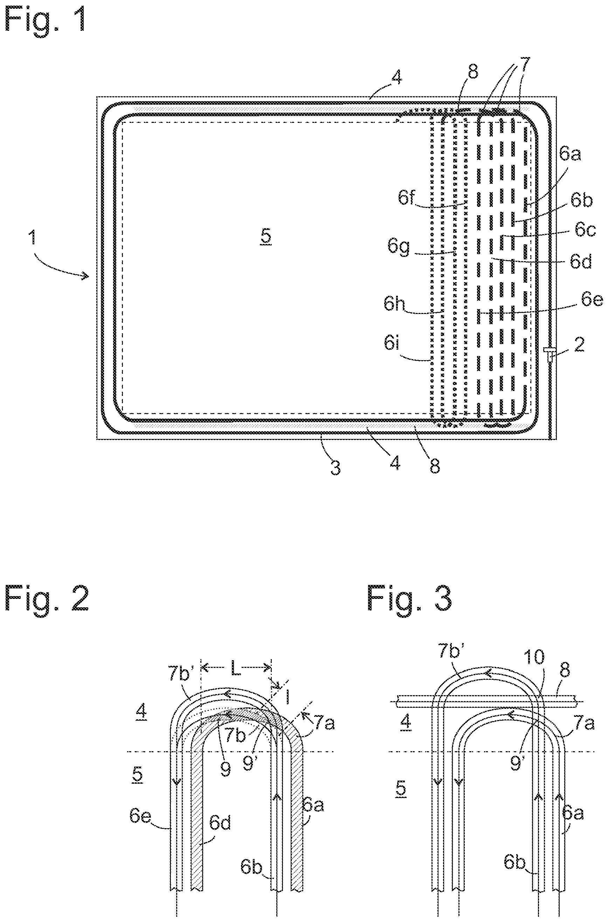

Fig. 1 zeigt eine in herkömmlicher Weise geplante Route zur Bearbeitung, insbesondere zum Abernten, einer landwirtschaftlichen Fläche 1. Die Bearbeitung beginnt damit, dass eine Maschine wie etwa ein Mähdrescher 2 zunächst - auf einem durchgezogen dargestellten - Routenstück 3 die Ränder der Fläche 1 aberntet, um so an zwei gegenüberliegenden Enden der Fläche 1 Vorgewende 4 frei zu legen, auf denen der Mähdrescher 2 später, beim Abernten eines zwischen den Vorgewenden 4 liegenden Hauptteils 5 der Fläche 1, Platz zum Wenden hat. Die Breite, die das Vorgewende 4 bekommt, hängt vom Wendekreis des Mähdreschers 2 ab. Im hier gezeigten Beispiel ist angenommen, dass der Wendekreisdurchmesser in etwa dem Dreifachen der Arbeitsbreite des Mähdreschers 2 entspricht, so dass eine zwei Arbeitsbreiten entsprechende Breite des Vorgewendes 4 genügt, um darauf einen zum Wenden erforderlichen Halbkreis fahren zu können.

Auf dem Hauptteil 5 fährt der Mähdrescher 2 entlang zueinander paralleler, gestrichelt eingezeichneter, allgemein mit 6 bezeichneter Spuren von einem Vorgewende 4 zum anderen. Da der Wendekreis des Mähdreschers 2 größer ist als seine Arbeitsbreite, können zwei benachbarte Spuren 6 nicht unmittelbar aufeinander folgend abgefahren werden, ohne dass dafür der Mähdrescher 2 auf dem Vorgewende 4 vor- und zurücksetzen müsste. Dies ist jedoch aus Zeitgründen und auch wegen der damit verbundenen Belastung des Bodens unerwünscht. Der Mähdrescher fährt daher im Anschluss an eine erste Spur 6a des Hauptteils 5 im vorliegenden Fall eine drittnächst benachbarte Spur 6d, dann die der ersten Spur 6a unmittelbar benachbarte Spur 6b, wiederum eine drittnächste Spur 6e, und dann die Spur 6c. Auf diese Weise wird ein Flächenstück mit der fünffachen Arbeitsbreite des Mähdreschers 2 abgeerntet. In einer Folgeetappe werden der Reihe nach Spuren 6h, 6f, 6i, 6g abgefahren. Das Muster dieser vier Spuren kann beliebig oft wiederholt werden, bis der gesamte Hauptteil 5 abgeerntet ist.

Wie in Fig. 1 zu erkennen, kreuzen die Spuren 6 verbindende Bögen 7 auf den Vorgewenden 4 einander vielfach, und es entsteht eine sich in Längsrichtung der Vorgewende 4 erstreckende Zone 8, die im Mittel mehrfach überfahren und dadurch stark verdichtet wird.

Das Problem der lokal starken Verdichtung ist umso gravierender, je zahlreicher die Bearbeitungen der Fläche 1 sind. Eine erste Verdichtung resultiert bereits beim Einsäen der Fläche. Weitere Verdichtungen kommen hinzu, wenn die heranwachsende Frucht gedüngt oder mit Pflanzenschutzmitteln behandelt wird. Um bei Behandlungen, die in der Vegetationszeit der Frucht vorgenommen werden, letztere nicht zu beschädigen, ist es üblich, bereits bei der Saat Gassen frei zu halten, auf denen sich später ein Düngerstreuer, eine Spritzmaschine oder dergleichen bewegen kann. Je häufiger diese Gassen befahren werden, umso größer ist die Gefahr einer übermäßigen Verdichtung, insbesondere wiederum im Bereich des Vorgewendes 4.

Um dieses Problem zu beheben, sieht die Erfindung ein Routenplanungssystem mit einem Leitrechner vor, der mit GPS-Empfängern sämtlicher im Laufe eines Jahres auf der Fläche 1 eingesetzten Maschinen kommuniziert, um die von den Maschinen zurückgelegten Routen zu verfolgen und die Auswirkungen dieser Maschinen auf die Bodenverdichtung anhand eines Modells ortsaufgelöst zu berechnen. Ein solches Modell, das für den auf der Fläche 1 vorherrschenden Bodentyp empirisch ermittelt sein kann, liefert für einen gegebenen Ort der Fläche 1 einen Schätzwert für die Bodenverdichtung in Abhängigkeit vom einwirkenden Druck, das heißt, von der Masse der Maschine dividiert durch die Aufstandsfläche ihrer Reifen, der Bodenfeuchtigkeit, der Temperatur etc. Bodenfeuchtigkeit und -temperatur können an Ort und Stelle auf der Fläche 1 gemessen werden; denkbar ist aber auch, dass der Leitrechner sie anhand von - zum Beispiel automatisch aus dem Internet bezogenen - meteorologischen Daten abschätzt. Anhand der bei einer Bearbeitung von der bearbeitenden Maschine gelieferten GPS-Positionsdaten ist der Leitrechner in der Lage, zu beurteilen, welche Teile der Fläche 1 dem Druck der Reifen der Maschine ausgesetzt waren und durch diese verdichtet sind, und welche nicht, und entsprechende Werte in einer Karte der Fläche 1 zu aktualisieren.

Der Hauptrechner aktualisiert diese Verdichtungskarte von Zeit zu Zeit auch dann, wenn keine Bearbeitung der Fläche 1 stattfindet, um der Tatsache Rechnung zu tragen, dass verdichtete Bereiche durch die Aktivität von Bodenlebewesen wie insbesondere Regenwürmern oder im Winter durch Frostgare wieder aufgelockert werden. Auch diese "negative" Verdichtung kann durch ein Modell in Abhängigkeit von Bodentemperatur, Feuchtigkeitsgehalt, Bodenzusammensetzung etc. beschrieben werden.

Anhand der Karte kann jederzeit beurteilt werden, welche Bereiche der Fläche 1 noch befahren werden können und welche besser nicht befahren werden sollten, um dort eine kritische Bodenverdichtung zu vermeiden.

In Fig. 2 ist ein durch Befahren mit dem Mähdrescher 2 verdichtetes Routenstück, bestehend zum Beispiel aus Spuren 6a, 6c und einem sie verbindenden Bogen 7a, als schraffierte Fläche dargestellt. Wenn der Mähdrescher 2, wie mit Bezug auf Fig. 1 beschrieben, im Anschluss an die Spur 6d die Spur 6b fährt, kreuzt ein Bogen 7b, der die Spur 6b mit der anschließend gefahrenen Spur 6e verbindet, notwendigerweise den Bogen 7a. Wenn dieser zweite Bogen 7b, wie in Fig. 2 dargestellt, genauso weit auf das Vorgewende 4 ausgreift wie der Bogen 7a, dann überschneiden sich die Verdichtungszonen der zwei Bögen 7a, 7b, auf einem Flächenstück 9 mit einer großen Länge L, und es kommt dort durch Mehrfachüberfahrung zu einer unerwünscht starken Verdichtung.

Eine Verdichtung, die auf einer zu großen Länge einen vorgegebenen Grenzwert übersteigt, wird von dem Leitrechner als unzulässig beurteilt. Eine Route, die ein solches Stück enthält, wird verworfen, und eine neue Route wird erstellt. Das Ergebnis hiervon ist, dass letztlich eine Route beibehalten wird, bei der die zwischen zwei aufeinander folgenden Spuren gefahrenen Bögen unterschiedlich weit ins Vorgewende 4 ausgreifen, wie in Fig. 2 anhand der Bögen 7a und 7b' dargestellt. Da der Bogen 7b' weiter ausgreift als der Bogen 7a, kreuzen sich beide unter einem wesentlich größeren Winkel als die Bögen 7a, 7b, und die Länge l des Kreuzungsbereichs 9' zwischen beiden ist deutlich sichtbar reduziert.

Durch das Planen von unterschiedlich weit in das Vorgewende 4 ausgreifenden Bögen zwischen aufeinander folgenden Spuren kann auch das Problem einer hohen Verdichtung entlang der von einem Düngerstreuer oder einem Spritzfahrzeug während der Vegetationsperiode gefahrenen Gassen verringert werden. Fig. 3 zeigt eine durch diese Fahrzeuge stark verdichtete Zone 8 auf dem Vorgewende 4. Die Breite des Vorgewendes 4 ist so bemessen, dass ein Bogen 7a auf dem zwischen der Zone 8 und dem Hauptteil 5 liegenden Teil des Vorgewendes 4 Platz findet. Da dieser Bogen die Zone 8 nicht kreuzt, führt er zu keiner kritischen Verdichtung. Der Bogen 7b' greift weiter aufs Vorgewende 4 aus als der Bogen 7a, und er überquert die Zone 8. Je näher der Kreuzungswinkel zwischen dem Bogen 7b' und der Längsrichtung der Zone 8 am rechten Winkel ist, umso kleiner ist das Stück 10 der Zone 8, der durch Überfahren mit dem Mähdrescher 2 zusätzlich verdichtet wird.

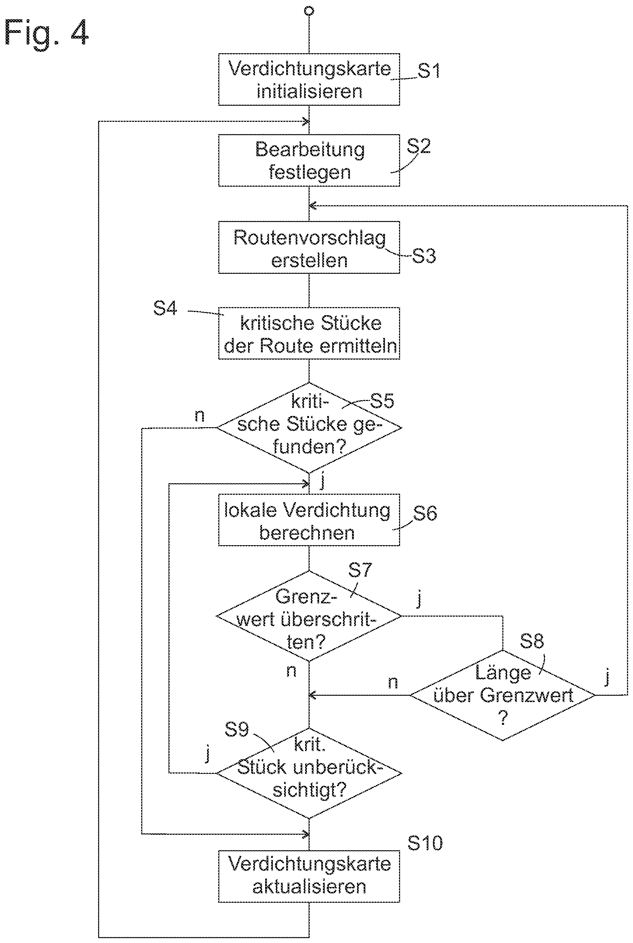

Fig. 4 ist ein Flussdiagramm eines von dem Leitrechner ausgeführten Verfahrens. Vor der erstmaligen Bearbeitung der Fläche 1 wird eine Verdichtungskarte dieser Fläche erstellt. Dies kann nach dem aus DE 195 45 704 A1 bekannten Verfahren geschehen; im Rahmen der vorliegenden Erfindung ist es jedoch einfacher und ebenfalls praktikabel, einen Anfangswert der Verdichtung für alle Punkte eines über der Fläche 1 definierten Netzes plausibel abzuschätzen. Der Schätzwert der Verdichtung kann für alle Punkte der Fläche gleich sein, oder, falls bekannt ist, dass Teile der Fläche 1 sich in der Zusammensetzung des Bodens, in der Entfernung zum Grundwasser oder zu einem Wasserlauf oder andere verdichtungsrelevanten Parametern unterscheiden, können entsprechend dieser Unterschiede ortsabhängig unterschiedliche Anfangswerte der Verdichtung angenommen werden.

In einem nächsten Schritt S2 wird - vorzugsweise durch Eingabe eines Benutzers - eine nächste auf der Fläche 1 vorzunehmende Bearbeitung festgelegt. In Abhängigkeit von der festgelegten Bearbeitung erstellt der Leitrechner in Schritt S3 nach einem beliebigen bekannten Verfahren zunächst einen Routenvorschlag. Der Routenvorschlag definiert die auf der Fläche 1 zurückzulegenden Wege einer oder gegebenenfalls mehrerer zum Durchführen der in Schritt S2 festgelegten Bearbeitung vorgesehener Maschinen sowie gegebenenfalls von Hilfsfahrzeugen, die benötigt werden, um im Falle einer verteilenden Bearbeitung wie etwa Säen, Düngen, etc. die Maschinen mit benötigten Betriebsmitteln wie Saatgut, Düngemittel, etc. zu versorgen bzw. um bei einer sammelnden Bearbeitung, insbesondere beim Abernten der Fläche 1, von den Maschinen gesammeltes Material, insbesondere Erntegut, zu übernehmen und abzutransportieren. Die Routen der Hilfsfahrzeuge müssen mit denen der Maschinen örtlich und zeitlich koordiniert sein, um Stillstandszeiten der Maschinen aufgrund fehlender Betriebsmittel oder aufgrund erschöpfter Ladekapazität fürs Erntegut zu vermeiden.

In Schritt S4 ermittelt der Leitrechner kritische Stücke der in Schritt S3 vorgeschlagenen Route. Als kritisch wird ein Routenstück eingestuft, wenn die Differenz zwischen der aktuellen Bodenverdichtung entlang des Routenstücks, wie in der Verdichtungskarte angegeben, und einem vorgegebenen oberen Grenzwert der Verdichtung so gering ist, dass das Abfahren der Route unter ungünstigen, aber realistischen Bedingungen, insbesondere mit einer voll mit Betriebsmitteln oder Erntegut beladenen Maschine, die Überschreitung des Grenzwerts zur Folge hätte.

Wenn solche kritischen Stücke nicht gefunden werden, wird die vorgeschlagene Route akzeptiert, und das Verfahren springt unmittelbar von Schritt S5 zum Schritt S10, wo die Verdichtungskarte anhand der akzeptierten und demnächst zu fahrenden Route aktualisiert wird. Um die Verdichtungskarte zu aktualisieren, wird für jeden Stützpunkt des Netzes, über den die Route verläuft, ein aktualisierter Wert der Bodenverdichtung berechnet, der sich ergäbe, wenn die Route abgefahren würde. Ein zur Berechnung der aktualisierten Bodenverdichtung in einer gegebenen Flächeneinheit der Fläche 1 verwendetes Modell hat als Parameter die Verdichtung der Flächeneinheit zum gegenwärtigen Zeitpunkt, d.h. vor dem Abfahren der akzeptierten Route, Bodenfeuchtigkeit und -temperatur, die anhand von punktuellen Messungen auf der Fläche 1 oder anhand von meteorologischen Daten abgeschätzt sein können, wenigstens ein die Verdichtungsneigung des Bodens beschreibender, mit dessen Zusammensetzung verknüpfter Parameter, die Aufstandsfläche der Reifen der Maschine sowie ihr voraussichtliches Gewicht am betreffenden Stützpunkt, das sich zusammensetzt aus dem Leergewicht der Maschine und dem zeitlich veränderlichen Gewicht der mitgeführten Betriebsmittel oder des mitgeführten Ernteguts.

Wenn kritische Stücke in der Route gefunden worden sind, verzweigt das Verfahren von Schritt S5 zu Schritt S6, in welchem die lokale Verdichtung des Bodens entlang einem dieser kritischen Stücke berechnet wird. Das hierfür verwendete Modell ist das gleiche, das auch bei der Aktualisierung der Verdichtungskarte in Schritt S10 verwendet wird.

Wenn sich in Schritt S7 herausstellt, dass auf wenigstens einem Teil des kritischen Routenstücks der Grenzwert der zulässigen Bodenverdichtung überschritten ist, wird in Schritt S8 die Länge dieses Teils berechnet. Grenzwertüberschreitungen auf einer Länge von nicht mehr als zum Beispiel dem 1,5 bis 2,0-fachen der Spurbreite der Maschine können unvermeidlich sein, da es zum Bearbeiten der gesamten Fläche 1 unerlässlich sein kann, dass die Route Kreuzungspunkte aufweist. Überschreitungen des Grenzwerts der Verdichtung, die unter der zulässigen maximalen Länge bleiben, bleiben daher unberücksichtigt. Wenn hingegen der Verdichtungsgrenzwert auf einer größeren als der zulässigen Länge überschritten ist, kehrt das Verfahren zu Schritt S3 zurück, d.h. der vorliegende Routenvorschlag wird verworfen, und ein neuer wird erstellt.

Um den Verarbeitungsaufwand für die Erstellung des neuen Routenvorschlags gering zu halten, kann an die den neuen Routenvorschlag erstellende Routine eine Information über das kritische Routenstück übergeben werden, das zur Verwerfung des Vorschlags geführt hat.

Wenn in Schritt S7 keine Überschreitung des Verdichtungsgrenzwerts festgestellt wird oder die Länge, auf der die Überschreitung stattfindet, unter der maximal zulässigen Länge bleibt, wird in Schritt S9 geprüft, ob noch ein weiteres kritisches Stück zu untersuchen ist. Wenn ja kehrt das Verfahren zurück zu Schritt S6, um für dieses Stück die Verdichtung zu berechnen; andernfalls ist die in Schritt S3 vorgeschlagene Route akzeptiert, und das Verfahren geht über zu Schritt S10, um die aus dem Abfahren dieser Route resultierende Bodenverdichtung zu berechnen und damit die Verdichtungskarte zu aktualisieren, wie oben bereits beschrieben. Für diese Aktualisierung können bereits in Schritt S6 berechnete Verdichtungswerte herangezogen werden, so dass diese nicht erneut berechnet werden müssen.

Das oben beschriebene Verfahren wird nicht nur für die Routen der die eigentliche Bearbeitung vornehmenden Maschinen ausgeführt, sondern auch für die der Hilfsfahrzeuge, sofern diese die Fläche 1 befahren.

Das Verfahren der Fig. 4 ist anwendbar bei Bearbeitungen wie Säen und Ernten, bei denen die Maschinen 1 sich auf der Fläche 1 bewegen können, ohne Einschränkungen durch vorhandenen, zu schonenden Pflanzenbestand berücksichtigen zu müssen. Bei Pflegebearbeitungen wie etwa dem Ausbringen von Dünger oder Pflanzenschutzmitteln besteht in der Regel keine Planungsfreiheit für die von den Bearbeitungsmaschinen zu verfolgende Route. Dennoch wird für jede derartige Bearbeitung der oben beschriebene Schritt S10 des Aktualisierens der Verdichtungskarte ausgeführt, damit später für die Routenplanung der Erntemaschine aktuelle Werte der Bodenverdichtung zur Verfügung stehen.

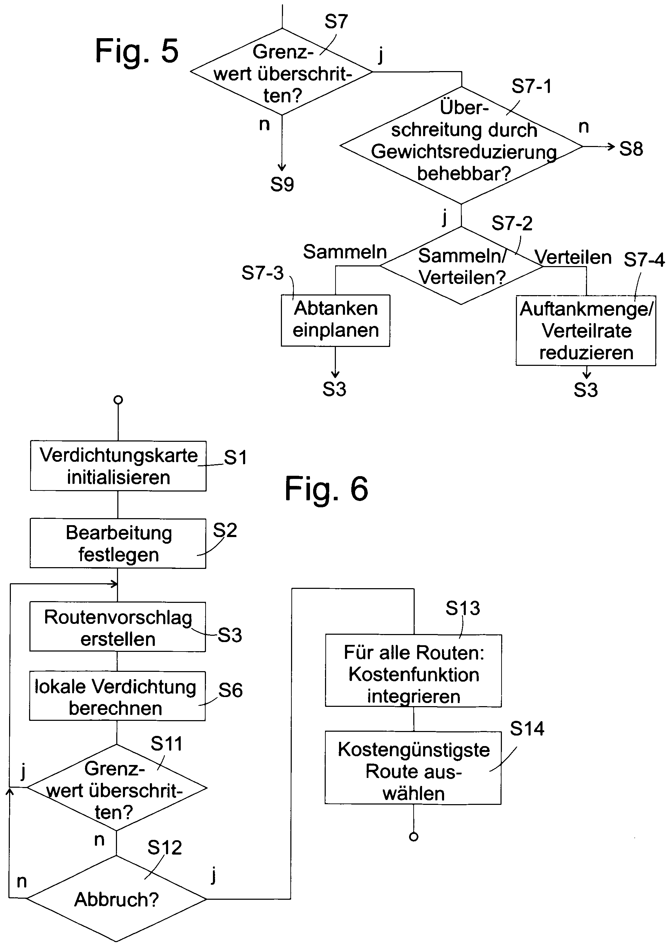

Eine Weiterbildung des oben beschriebenen Verfahrens wird anhand des Flussdiagramms der Fig. 5 erläutert. Der in diesem Diagramm gezeigte Schritt S7 und die vorhergehenden Schritte S1 bis S6 sind mit denjenigen der Fig. 4 identisch. Falls keine Grenzwertüberschreitung festgestellt wird, geht auch im Falle der Fig. 5 das Verfahren zu Schritt S9 über. Falls in Schritt S7 eine Überschreitung des Verdichtungsgrenzwerts festgestellt wird, wird in Schritt S7-1 geprüft, ob die Grenzwertüberschreitung durch Reduktion des Gewichts der Maschine behebbar ist, das heißt ob die Verdichtung unter dem Grenzwert bliebe, wenn die Maschine mit einer geringeren Menge an zu verteilenden Betriebsmitteln oder an eingebrachtem Erntegut unterwegs wäre. Wenn dies nicht der Fall ist, verzweigt das Verfahren zum Schritt S8 der Fig. 4. Wenn sich die Grenzwertüberschreitung jedoch als behebbar herausstellt, hängt die zu treffende Maßnahme von der Art der durchzuführenden Bearbeitung ab. Im Falle einer Bearbeitung vom Sammeltyp, insbesondere beim Abernten der Fläche 1, kehrt das Verfahren zu Schritt S3 zurück, wobei an die Routenplanungsroutine die Anweisung (S7-3) ergeht, ein Abtanken des gesammelten Guts von der Maschine einzuplanen, bevor diese den zur Grenzwertüberschreitung führenden Teil der Route erreicht. D.h. es ändert sich nicht der von der Maschine zurückgelegte Weg, doch da das Gewicht der Maschine durch das Abtanken reduziert ist, kann sie den kritischen Routenabschnitt passieren, ohne dass es zu einer Überschreitung des Verdichtungsgrenzwertes kommt.

Im Falle einer verteilenden Bearbeitung wie etwa beim Säen, Düngen oder Ausbringen von Pflanzenschutzmittel kehrt das Verfahren ebenfalls zu Schritt S3 zurück, wobei an die Routenplanungsroutine die Anweisung ergeht (S7-4), die Menge an Betriebsmitteln, mit der die Maschine in einem letzten Auftankvorgang vor Erreichen des kritischen Abschnitts beladen wird, zu reduzieren, um so das Gewicht der Maschine auf dem kritischen Routenabschnitt so weit zu reduzieren, dass der Grenzwert eingehalten werden kann. Wenn die Überschreitung des Grenzwerts der Verdichtung unmittelbare Folge des Betankens der Maschine ist, kann alternativ, insbesondere beim Düngen oder Ausbringen von Pflanzenschutzmitteln, auch vorgesehen werden, die Ausbringrate vor Erreichen des kritischen Abschnitts zu reduzieren, so dass ein Nachtanken erst notwendig wird, wenn die Maschine den kritischen Routenabschnitt passiert hat.

Die Möglichkeit, die Bodenverdichtung über die Auftankmenge oder die Verteilrate eines Betriebsmittels zu beeinflussen, ist insbesondere für Bearbeitungen wichtig, die am lebenden Pflanzenbestand vorgenommen werden, da der Weg, den eine Maschine bei einer solchen Bearbeitung zurücklegen kann, in der Regel durch bereits beim Säen angelegte Gassen festgelegt ist und nicht wie beim Säen oder Ernten willkürlich variiert werden kann.

Eine andere Ausgestaltung des erfindungsgemäßen Verfahrens ist in Fig. 6 dargestellt. Die Schritte S1 bis S3 und S6 sind dieselben wie oben mit Bezug auf Fig. 4 beschrieben. Schritt S11 kann dem oben beschriebenen Schritt S7 gleichen, oder es können wie durch die Kombination der beschriebenen Schritte S7 und S8 nur solche Routen ausgeschieden werden, die auf einem unzulässig langen Abschnitt zu einer Überschreitung des Verdichtungsgrenzwerts führen würden. In Schritt S12 wird ein Abbruchkriterium abgeprüft, etwa ob eine vorgegebene Zahl an den Verdichtungsgrenzwert einhaltenden Routen gefunden worden ist oder ob ein hierfür vorgesehenes Rechenzeitkontingent erschöpft ist. In Schritt S13 wird über jede Route eine Kostenfunktion aufintegriert. Die Kostenfunktion ist eine nichtlineare Funktion der lokalen Verdichtung entlang der Route. Indem die Kostenfunktion so definiert ist, dass sie mit der Verdichtung mehr als linear zunimmt, erhält eine Route einen um so niedrigeren Kostenwert zugewiesen, je kürzer sie ist und um so weniger stark verdichtete Abschnitte sie aufweist. Dies hat zur Folge, dass in Schritt S14 diejenige Route als die kostengünstigste ausgewählt wird, die sowohl hinsichtlich der resultierenden Bodenverdichtung vorteilhaft ist als auch im Mittel möglichst weit unter dem Grenzwert der Verdichtung bleibt. Dies erleichtert die Planung einer Route für die übernächste Bearbeitung.

Der Schritt S11 kann auch entfallen, falls die Kostenfunktion so definiert wird, dass jede Route, die den Grenzwert der Verdichtung überschreitet, mit einem prohibitiv hohen Wert der Kostenfunktion belegt wird.

### Bezugszeichen

- 1: landwirtschaftliche Fläche
- 2: Mähdrescher
- 3: Routenstück
- 4: Vorgewende
- 5: Hauptteil
- 6: Spur
- 7: Bogen
- 8: Zone
- 9, 10: Flächenstück

## Patentansprüche

1. Verfahren zur Planung einer Route (3, 6, 7) zur Bearbeitung einer landwirtschaftlichen Fläche (1) durch eine fahrbare Maschine (2), mit den Schritten
Zumindest horizontal ortsaufgelöstes Abschätzen einer aus einer früheren Bearbeitung der Fläche (1) durch dieselbe oder eine andere Maschine (2) resultierenden Bodenverdichtung (S10), und
Berücksichtigen der ermittelten Bodenverdichtung bei der Festlegung des Verlaufs einer Route (3) für die vorgesehene Bearbeitung der Fläche (1) durch die Maschine (2, S4-S9), **dadurch gekennzeichnet, dass** ein Satz von ortsaufgelösten Bodenverdichtungsdaten der zu bearbeitenden Fläche bei jeder Bearbeitung der Fläche aktualisiert wird (S10).

2. Verfahren nach Anspruch 1, **dadurch gekennzeichnet, dass** der Datensatz durch gemessene Bodendichtedaten initialisiert wird.

3. Verfahren nach Anspruch 1, oder 2, **dadurch gekennzeichnet, dass** ein für die Bodenverdichtung eines Flächenstücks repräsentativer Wert als Funktion wenigstens eines Parameters der Maschine, insbesondere wenigstens eines unter Maschinentyp, Art der Bearbeitung, momentaner Masse der Maschine, Reifendruck und Reifenaufstandsfläche ausgewählten Parameters, und/oder wenigstens eines Parameters des Bodens, insbesondere wenigstens eines unter Bodenzusammensetzung, Bodenfeuchte, Bodentemperatur ausgewählten Parameters berechnet wird (S6).

4. Verfahren nach einem der vorhergehenden Ansprüche, **dadurch gekennzeichnet, dass** ein für eine natürliche Bodenauflockerung repräsentativer Wert als Funktion wenigstens eines unter überfahrungsloser Zeit, Bodenzusammensetzung, Bodenfeuchte, Bodentemperatur ausgewählten Parameters berechnet wird (S6).

5. Verfahren nach einem der vorhergehenden Ansprüche, **dadurch gekennzeichnet, dass** eine Route verworfen wird (S7, S8; S11), wenn auf wenigstens einem Stück der Route die aktuelle Verdichtung einen Grenzwert übersteigt.

6. Verfahren nach einem der Ansprüche 1 bis 4, **gekennzeichnet durch** die Schritte:
versuchsweises Festlegen einer Route (S3); Abschätzen einer aus dem Abfahren der Route resultierenden Bodenverdichtung für wenigstens ein Stück der Route (S6);
Verwerfen der Route (S7, S8; S11), wenn die Abschätzung in dem Stück eine Überschreitung eines Grenzwerts der Bodenverdichtung ergibt.

7. Verfahren nach Anspruch 6, **dadurch gekennzeichnet, dass** für die Abschätzung der Verdichtung die Masse des Fahrzeugs ortsabhängig prognostiziert wird.

8. Verfahren nach Anspruch 5, 6 oder 7, **dadurch gekennzeichnet, dass** die Route nur verworfen wird (S8), wenn die Länge des Stücks, auf dem die Verdichtung den Grenzwert übersteigt, über einem Grenzwert liegt.

9. Verfahren nach einem der vorhergehenden Ansprüche, **gekennzeichnet durch** die Schritte: Vorplanen mehrerer alternativer Routen für die Bearbeitung der Fläche (S3); Integrieren eines für die Bodenverdichtung repräsentativen Parameters entlang einer jeden der vorgeplanten Routen (S13); und
Auswählen (S14) einer der vorgeplanten Routen unter Berücksichtigung der erhaltenen Integralwerte.

10. Verfahren nach einem der vorhergehenden Ansprüche, **gekennzeichnet durch** den Schritt des Vorziehens einer das Gewicht der Maschine vermindernden Maßnahme (S7-3) vor dem Überfahren eines hoch verdichteten Flächenstücks.

11. Verfahren nach einem der vorhergehenden Ansprüche, **gekennzeichnet durch** den Schritt des Aufschiebens einer das Gewicht der Maschine erhöhenden Maßnahme (S7-4) bis nach dem Überfahren eines hoch verdichteten Flächenstücks.

12. Vorrichtung zur Durchführung des Verfahrens nach Anspruch 1 mit einem Leitrechner und wenigstens einem Positionssensor an Bord einer fahrbaren Maschine (2) zum Übermitteln von den Ort der Maschine (2) betreffender Information an den Leitrechner.

## Claims

1. A method of planning a route (3, 6, 7) for working an agricultural area (1) by a mobile machine (2), comprising the steps:
at least horizontally location-resolved estimation of a soil compacting (S10) resulting from an earlier working of the area (1) by the same or another machine (2), and
taking account of the ascertained soil compacting in establishing the configuration of a route (3) for the intended working of the area (1) by the machine (2, S4-S9),
**characterised in that** a set of location-resolved soil compacting data of the area to be worked is updated in each working of the area (S10).

2. A method according to claim 1 **characterised in that** the data set is initialised by measured soil density data.

3. A method according to claim 1 or claim 2 **characterised in that** a value representative of the soil compacting of a part of the area is calculated as a function of at least one parameter of the machine, in particular at least one parameter selected from machine type, nature of the working, instantaneous mass of the machine, tyre pressure and tyre contact patch area, and/or at least one parameter of the soil, in particular at least one parameter selected from soil composition, soil moisture content, and soil temperature (S6).

4. A method according to one of the preceding claims **characterised in that** a value representative of natural soil loosening is calculated as a function of at least one parameter selected from time involving no driving over the soil, soil composition, soil moisture content, and soil temperature (S6).

5. A method according to one of the preceding claims **characterised in that** a route is discarded (S7, S8; S11) if the current compacting exceeds a limit value on at least a part of the route.

6. A method according to one of claims 1 to 4 **characterised by** the steps:
establishing on a trial basis a route (S3);
estimating a soil compacting resulting from departure from the route for at least a part of the route (S6);
discarding the route (S7, S8; S11) if the estimate in the part results in a limit value of soil compacting being exceeded.

7. A method according to claim 6 **characterised in that** the mass of the vehicle is predicted in dependence on location for estimating soil compacting.

8. A method according to claim 5, claim 6 or claim 7 **characterised in that** the route is discarded (S8) only if the length of the part on which the soil compacting exceeds the limit value is above a limit value.

9. A method according to one of the preceding claims **characterised by** the steps:
pre-planning a plurality of alternative routes for working the area (S3);
integrating a parameter representative of soil compacting along each one of the pre-planned routes (S13); and
selecting (S14) one of the pre-planned routes having regard to the integral values obtained.

10. A method according to one of the preceding claims **characterised by** the step of bringing forward a measure (S7-3) for reducing the weight of the machine before driving over a highly compacted part of the area.

11. A method according to one of the preceding claims **characterised by** the step of postponing a measure (S7-4) for increasing the weight of the machine until after having driven over a highly compacted part of the area.

12. Apparatus for carrying out the method according to claim 1 with a host computer and at least one position sensor on board a mobile machine (2) for communicating information concerning the location of the machine (2) to the host computer.

## Revendications

1. Procédé de planification d'un itinéraire (3, 6, 7) pour travailler une surface agricole (1) par l'intermédiaire d'une machine roulante (2), avec les étapes de
évaluation à résolution spatiale au moins horizontale d'un compactage de sol (S10) résultant d'un travail antérieur de la surface (1) par la même ou une autre machine (2), et prise en compte du compactage de sol déterminé, lors de la définition du tracé d'un itinéraire (3) pour le travail prévu de la surface (1) par l'intermédiaire de la machine (2, S4-S9), **caractérisé en ce qu'**un ensemble de données de compactage de sol à résolution spatiale de la surface à traiter est actualisé à chaque travail de la surface (S10).

2. Procédé selon la revendication 1, **caractérisé en ce que** l'ensemble de données est initialisé par l'intermédiaire de données de densité de sol mesurées.

3. Procédé selon la revendication 1 ou 2, **caractérisé en ce qu'**une valeur représentative du compactage de sol d'une parcelle est calculée en fonction au moins d'un paramètre de la machine, en particulier au moins d'un paramètre choisi parmi le type de machine, la nature du travail, la masse instantanée de la machine, la pression des pneumatiques et la surface d'appui des pneumatiques, et/ou au moins d'un paramètre du sol, en particulier au moins d'un paramètre choisi parmi la composition du sol, l'humidité du sol, la température du sol (S6).

4. Procédé selon une des revendications précédentes, **caractérisé en ce qu'**une valeur représentative d'un ameublissement naturel de sol est calculée en fonction au moins d'un paramètre choisi parmi le temps sans passage de véhicule, la composition du sol, l'humidité du sol, la température du sol (S6).

5. Procédé selon une des revendications précédentes, **caractérisé en ce qu'**un itinéraire est rejeté (S7, S8 ; S11) si le compactage instantané excède une valeur limite sur au moins une partie de l'itinéraire.

6. Procédé selon une des revendications 1 à 4, **caractérisé par** les étapes :
définition à titre d'essai d'un itinéraire (S3) ; évaluation d'un compactage de sol résultant d'un parcours de l'itinéraire pour au moins une partie de l'itinéraire (S6) ;
rejet de l'itinéraire (S7, S8 ; S11) si l'évaluation dans la partie révèle un surpassement d'une valeur limite du compactage de sol.

7. Procédé selon la revendication 6, **caractérisé en ce que**, pour l'évaluation du compactage, la masse du véhicule est pronostiquée en fonction de l'emplacement.

8. Procédé selon la revendication 5, 6 ou 7, **caractérisé en ce que** l'itinéraire n'est rejeté (S8) que si la longueur de la partie sur laquelle le compactage surpasse la valeur limite est supérieure à une valeur limite.

9. Procédé selon une des revendications précédentes, **caractérisé par** les étapes :
pré-planification de plusieurs itinéraires de remplacement pour le travail de la surface (S3) ;
intégration d'un paramètre représentatif du compactage de sol le long de chacun des itinéraires pré-planifiés (S13) ; et
choix (S14) d'un des itinéraires pré-planifiés en tenant compte des valeurs intégrales obtenues.

10. Procédé selon une des revendications précédentes, **caractérisé par** l'étape consistant à prioriser une mesure réduisant le poids de la machine (S7-3) avant le passage sur une parcelle hautement compactée.

11. Procédé selon une des revendications précédentes, **caractérisé par** l'étape consistant à ajourner une mesure augmentant le poids de la machine (S7-4) après le passage sur une parcelle hautement compactée.

12. Dispositif de mise en œuvre du procédé selon la revendication 1, comprenant un calculateur pilote et au moins un capteur de position à bord d'une machine roulante (2) pour transmettre au calculateur pilote une information relative à l'emplacement de la machine (2).
